# FASCICULE DE BREVET EUROPEEN

(11) **EP 2 117 815 B1**
(45) Date de publication et mention de la délivrance du brevet: **23.07.2014**
(21) Numéro de dépôt: 08708709.4
(22) Date de dépôt: 05.02.2008
(51) Int. Cl.: B29C 70/08, B29C 70/38

(54) **PROCEDE DE FABRICATION D'UNE PIECE COMPOSITE**
VERFAHREN ZUR HERSTELLUNG EINES VERBUNDSTOFFTEILS
METHOD FOR MAKING A COMPOSITE PART

(30) Priorité: 06.02.2007 FR 0753089
(43) Date de publication de la demande: 18.11.2009
(73) Titulaire: European Aeronautic Defence and Space Company EADS France, 75016 Paris (FR)
(72) Inventeur: SOCCARD, Eric, F-44130 Blain (FR)
(74) Mandataire: Ilgart, Jean-Christophe
(86) Numéro de dépôt international: PCT/EP2008/051410
(87) Numéro de publication internationale: WO 2008/101803

(56) Documents cités:
- EP-A2- 0 247 359
- EP-A2- 0 412 346
- GB-A- 1 190 261
- US-A- 5 074 770

## Description

L'invention présente concerne la dépose d'un premier pli d'un composite se présentant en bande sur un support, appelé outillage, plan ou courbe de mise en forme par une machine automatique.

Les structures composites constituées de renforts en fibres longues et d'une matrice en polymère sont généralement fabriquées avec des plis de pré-imprégnés superposés et drapés dans des directions adéquates manuellement ou automatiquement. Elles subissent un cycle de transformation finale appelée polymérisation pour les résines thermodurcissables et consolidation pour les résines thermoplastiques.

Aucune méthode automatique n'existe aujourd'hui pour déposer le premier pli du composite. En général, les bandes sont placées manuellement de façon adjacente les unes aux autres sur un tissu d'accrochage posé sur l'outillage, et le bridage de l'ensemble est effectué en pompant à travers des trous d'aspiration à la surface de l'outillage. Ce procédé se heurte à des difficultés quand la pièce à construire, et donc l'outillage de mise en forme, a une surface complexe non développable car le tissu n'épouse plus bien la forme de l'outillage. L'idée de multiplier les trous d'aspiration pour améliorer la disposition du tissu donnerait un outillage trop compliqué à construire et à employer.

GB - A - 1 190 261 est un art antérieur qui permet de fabriquer des panneaux de matière composite ayant une surface grenue imitant le cuir. Ce brevet concerne un dispositif de maintien et de dépose d'au moins une feuille de matière composite thermoplastique, comprenant un outillage de mise en forme de la couche, au moins une pompe d'aspiration d'air et un joint d'étanchéité périphérique disposé entre la feuille de matière thermoplastique et l'outillage.

On décrira ici le bridage du premier pli d'un composite, notamment thermoplastique, accompli de façon complètement automatique. Il permet de réaliser parfaitement la dépose de toutes les bandes par une machine de placement de fibres ou de drapage.

Il se distingue de ce brevet antérieur, par une couche de matière drainante posée sur l'outillage, la feuille de matière thermoplastique étant posée sur la couche de matière drainante, le joint d'étanchéité étant aussi disposé autour de la couche de matière drainante.

La feuille de matière thermoplastique sera intégrée à la structure finale du composite par le chauffage et l'accrochage mécanique produit par la fusion qui sera alors faite. Les machines actuelles produisent en effet un apport de chaleur suffisant pour fondre la résine thermoplastique généralement présente dans la matrice de pré-imprégné et permettre son accrochage entre les différents plis. Il en ira de même avec la feuille thermoplastique qui se fondra au fond du premier pli. Et surtout, la feuille thermoplastique amollie s'adaptera à la courbure de l'outillage en tout point grâce à l'aspiration. Le pli de matière composite sera alors à la bonne courbure. La feuille de matière thermoplastique sera avantageusement en matière identique ou similaire à celle de la résine du pré-imprégné constituant le composite ; elle devra en tout cas être compatible avec elle de façon à ne pas nuire à la qualité du produit fini.

La feuille de polymère permet aussi de brider la pièce en étant maintenue par aspiration par un petit nombre de trous de l'outillage.

L'invention est un procédé de création d'une pièce en matière composite défini par les revendications.

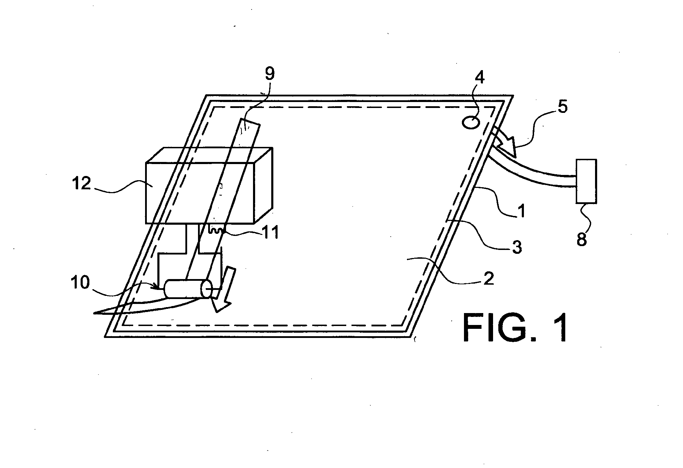

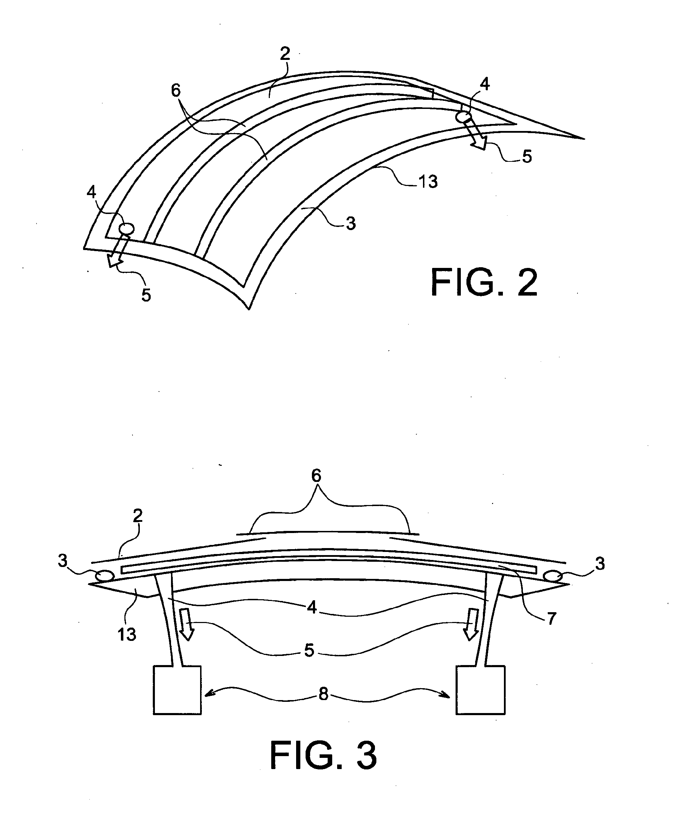

L'invention sera maintenant décrite en liaison aux figures, dont la figure 1 représente une réalisation du procédé, la figure 2 une réalisation illustrant plus précisément le dispositif, et la figure 3 une coupe de la réalisation de la figure 2.

La figure 1 représente un outillage 1 plan et qui constitue donc une forme simple de l'invention. Une feuille thermoplastique 2 est posée sur l'outillage. Un joint 3 de mastic d'étanchéité est disposé entre eux à la périphérie de la feuille thermoplastique 2. Le volume étanche ainsi formé est occupé par un tissu drainant (7, représenté sur d'autres figures) et consistant en un tissu ou un matelas de verre. Le volume clos a son gaz drainé par un trou d'aspiration 4 percé à travers l'outillage 1 et qui communique à une pompe à vide 8.

Une bande 9 de pré-imprégné est posée sur la feuille thermoplastique 2 et pressée sur lui par un dispositif automatique comprenant un rouleau presseur 10. Une source de chaleur 11 accompagnant le rouleau 10 en étant montée sur une même tête mobile 12 par rapport à l'outillage 1 complète la consolidation de la bande. La matière thermoplastique s'amollit, et la matière thermoplastique s'intègre à la bande 9 pendant sa transformation finale. La bande 9 suivante peut ensuite être déposée à côté de la précédente. La pièce est retirée de l'outillage 1 quand elle a été finie.

La figure 2 représente un outillage 13 présentant deux courbes différentes suivant ses axes principaux. Le maintien de l'adhérence des bandes est alors impossible avec les méthodes ordinaires, mais il reste possible en appliquant l'invention. La feuille thermoplastique 2 unique de la réalisation précédente peut être remplacée par un groupe de feuilles 2, toujours thermoplastiques, occupant chacune une portion de la surface de l'outillage 13 et qui se chevauchent à des portions de recouvrement 6. La figure 3 montre que le contact entre les feuilles thermoplastiques 2 n'existe généralement pas à ces portions de recouvrement 6 en raison de la complexité de courbure de l'outillage 13, mais la réalisation du procédé n'est pas gênée malgré la perte d'étanchéité si l'aspiration est faite à un débit plus important que dans la réalisation précédente. Le trou d'aspiration 4 unique de la réalisation précédente pourra alors être remplacé par une pluralité de trous d'aspiration 4, situés chacun sous une feuille thermoplastique 2 différente et pouvant être situés à des portions périphériques du dispositif, non loin du joint d'étanchéité 3. Un petit nombre des trous d'aspiration 4 suffit à un outillage même de grande superficie. Chacun des trous traversants donne alors avantageusement sur une pompe 8 à vide particulière.

Le procédé est le même que dans la réalisation précédente : les bandes 9 de pré-imprégné sont déposées les unes après les autres sur les feuilles de thermoplastique 2 ; l'échauffement amollit les feuilles thermoplastiques 2 et les fait épouser la forme de l'outillage 13 sans qu'elles forment de plis tout en les incorporant à la pièce construite.

## Revendications

1. Procédé de création d'une pièce en matière composite, comprenant les étapes de dépôt d'une couche de matière drainante (7) sur un outillage (1) de mise en forme, de dépôt d'au moins une feuille thermoplastique (2) sur la matière drainante, de dépôt d'une couche souple de la matière composite sur la feuille thermoplastique, et de chauffage de la couche de matière composite de manière à produire un amollissement de la feuille thermoplatique et une liaison intime entre la matière de la feuille thermoplastique et la couche de matière composite, une aspiration d'air étant réalisée à travers l'outillage (1).

2. Procédé de création d'une pièce en matière composite selon la revendication 1, **caractérisé en ce que** l'aspiration d'air est réalisée par des trous de drainage traversant l'outillage.

3. Procédé de création d'une pièce en matière composite selon l'une quelconque des revendicatons 1 ou 2, **caractérisé en ce qu'**il comprend une étape de dépôt d'un joint d'étanchéité périphérique (3) entre la feuille thermoplastique et l'outillage et autour de la couche de matière drainante (7).

4. Procédé de création d'une pièce en matière composite selon les revendications 2 et 3, **caractérisé en ce que** les trous de drainage sont situés à des portions périphériques d'un dispositif comprenant l'outillage (1) et le joint d'étanchéité périphérique (3) entourant lesdits trous.

5. Procédé de création d'une pièce en matière composite selon l'une quelconque des revendications 1 à 4, **caractérisé en ce que** l'outillage (1) comprend deux courbures différentes suivant des axes principaux.

6. Procédé de création d'une pièce en matière composite selon l'une quelconque des revendications 1 à 5, **caractérisé en ce qu'**il comprend le dépôt de plusieurs des feuilles thermoplastiques (2), couvrant chacune une portion de l'outillage (1) et se recouvrant à des portions de chevauchement (6).

## Patentansprüche

1. Verfahren zur Erzeugung eines Verbundmaterialstücks, umfassend die Schritte, bei denen eine Schicht aus drainierendem Material (7) auf ein Formungswerkzeug (1) aufgebracht wird, mindestens eine thermoplastische Bahn (2) auf das drainierende Material aufgebracht wird, eine flexible Schicht des Verbundmaterials auf die thermoplastische Bahn aufgebracht wird, und die Schicht von Verbundmaterial erwärmt wird, so dass ein Erweichen der thermoplastischen Bahn und eine innige Verbindung zwischen dem Material der thermoplastischen Bahn und der Schicht von Verbundmaterial erzeugt wird, wobei ein Ansaugen von Luft durch das Werkzeug (1) hindurch realisiert wird.

2. Verfahren zur Erzeugung eines Verbundmaterialstückes nach Anspruch 1, **dadurch gekennzeichnet, dass** das Ansaugen von Luft durch Drainagelöcher realisiert wird, die durch das Werkzeug hindurch verlaufen.

3. Verfahren zur Erzeugung eines Verbundmaterialstückes nach einem der Ansprüche 1 oder 2, **dadurch gekennzeichnet, dass** es einen Schritt umfasst, bei dem eine am Umfang befindliche Abdichtung (3) zwischen der thermoplastischen Bahn und dem Werkzeug, und um die Schicht aus drainierenden Material (7) herum, aufgebracht wird.

4. Verfahren zur Erzeugung eines Verbundmaterialstückes nach den Ansprüchen 2 und 3, **dadurch gekennzeichnet, dass** die Drainierlöcher sich an Umfangsabschnitten einer Vorrichtung befinden, die das Werkzeug (1) aufweist, und die am Umfang befindliche Abdichtung (3) diese Löcher umschließt.

5. Verfahren zur Erzeugung eines Verbundmaterialstückes nach einem der Ansprüche 1 bis 4, **dadurch gekennzeichnet, dass** das Werkzeug (1) zwei unterschiedliche Krümmungen entlang der Hauptachsen aufweist.

6. Verfahren zur Erzeugung eines Verbundmaterialstückes nach einem der Ansprüche 1 bis 5, **dadurch gekennzeichnet, dass** es umfasst, dass mehrere der thermoplastischen Bahnen (2) aufgebracht werden, die jeweils einen Abschnitt des Werkzeugs (1) bedecken und die sich an Überlappungsabschnitten (6) überdecken.

## Claims

1. A process for creating a part made of composite material, comprising steps of depositing a layer of draining material (7) on a shaping tool (1), depositing at least one thermoplastic sheet (2) on the draining material, depositing a flexible layer of the composite material on the thermoplastic sheet, and heating the layer of composite material so as to produce a softening of the thermoplastic sheet and a close bond between the material of the thermoplastic sheet and the layer of composite material, air being sucked through the tool (1).

2. A process for creating a part made of composite material according to claim 1, **characterised in that** air is sucked through drainage holes made across the tool.

3. A process for creating a part made of composite material according to any of claims 1 or 2, **characterised in that** it comprises a step of depositing a peripheral seal (3) between the thermoplastic sheet and the tool and around the draining layer (7).

4. A process for creating a part made of composite material according to claims 2 and 3, **characterised in that** the drainage holes are situated at peripheral portions of a device comprising the tool (1) and the peripheral seal (3) surrounding said holes.

5. A process for creating a part made of composite material according to any one of claims 1 to 4, **characterised in that** the tool (1) comprises two different curvatures along main axes.

6. A process for creating a part made of composite material according to any one of claims 1 to 5, **characterised in that** it comprises the depositing of several of the thermoplastic sheets (2), each covering a portion of the tool (1) and covering each other at overlap portion (6).
